(19) Europäisches Patentamt
European Patent Office
Office européen des brevets

(11) **EP 3 980 669 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **20732157.1**

(22) Anmeldetag: **04.06.2020**

(51) Internationale Patentklassifikation (IPC):
*F16H 19/04* (2006.01)   *F16H 25/18* (2006.01)
*F16H 31/00* (2006.01)   *F16H 25/12* (2006.01)
*B60N 2/06* (2006.01)   *F16H 25/20* (2006.01)

(52) Gemeinsame Patentklassifikation (CPC):
**B60N 2/067; F16H 19/04; F16H 25/12; F16H 25/18; F16H 31/007**

(86) Internationale Anmeldenummer:
**PCT/EP2020/065554**

(87) Internationale Veröffentlichungsnummer:
**WO 2020/245316 (10.12.2020 Gazette 2020/50)**

(54) **LINEARANTRIEB, LÄNGSVERSTELLEINHEIT EINES SITZES UND KRAFTFAHRZEUG**

LINEAR ACTUATOR, LONGITUDINAL ADJUSTMENT DEVICE OF A SEAT AND MOTOR VEHICLE

ENTRAINEMENT LINÉAIRE, DISPOSITIF DE RÉGLAGE LONGITUDINAL D'UN SIÈGE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.06.2019   EP 19178264**

(43) Veröffentlichungstag der Anmeldung:
**13.04.2022   Patentblatt 2022/15**

(73) Patentinhaber: **IMS Gear SE & Co. KGaA 78166 Donaueschingen (DE)**

(72) Erfinder:
• **WERSCHLER, Marco 78315 Radolfzell (DE)**

• **MITTELBACH, Marcel 79859 Schluchsee (DE)**

(74) Vertreter: **Westphal, Mussgnug & Partner Patentanwälte mbB Am Riettor 5 78048 Villingen-Schwenningen (DE)**

(56) Entgegenhaltungen:
**EP-A1- 0 482 827       EP-A1- 0 612 935
EP-A1- 0 879 976       EP-A1- 2 541 098
EP-B1- 0 612 935       EP-B1- 2 541 098
WO-A1-2005/032878     WO-A1-2008/028540
DE-A1- 19 932 046**

**Beschreibung**

Die vorliegende Erfindung betrifft einen Linearantrieb mit den Merkmalen des Anspruchs 1, eine Längsverstelleinheit für einen Sitz mit den Merkmalen des Anspruchs 20 und ein Kraftfahrzeug mit den Merkmalen des Anspruchs 21.

Linearantriebe sind aus dem Stand der Technik in unterschiedlichen Ausgestaltungen vorbekannt und werden verbreitet als Längsverstelleinheiten zum Verstellen der Position eines Sitzes in Kraftfahrzeugen verwendet. Längsverstelleinheiten wirken typischerweise mit einer an einem Chassis festgelegten Unterschiene und einer innerhalb dieser angeordneten Oberschiene zusammen, wobei die Oberschiene durch die Längsverstelleinheit motorisch verfahrbar ist und mit dem Sitz gekoppelt ist. Das Verstellen der Oberschiene durch die Längsverstelleinheit erfolgt im Stand der Technik typischer Weise mittels einer Spindel, welche innerhalb der Oberschiene angeordnet ist und an ihrem jeweiligen ersten Ende und zweiten Ende abgestützt ist. Derartige Längsverstelleinheiten sind beispielsweise aus der DE 36 40 197 A1, DE 42 08 948 C2, DE 196 42 655 C2, DE 198 15 283 A1, DE 10 2004 013 009 A1 und DE 10 2006 052 936 A1 bekannt.

Aus der EP 0 612 935 A1 ist ein weiterer Linearantrieb vorbekannt, wobei ein Bewegungs-Umwandlungsmechanismus verwendet wird, um bewegliche Platten zu bewegen.

Aufgrund der hohen Anforderungen an einen Linearantrieb, welcher neben der Verstellfunktion als Längsverstelleinheit auch eine Unfallsicherheit gewährleisten muss, weisen derartige Linearantriebe unterschiedliche Bauformen auf, die unterschiedliche Fertigungsmethoden und Verfahren erfordern. Es hat sich gezeigt, dass eine spielfreie Linearbewegung nur mit hohem Aufwand zu realisieren ist und dass die Bruchlasten nur aufwändig anzupassen sind.

Hier setzt die vorliegende Erfindung an.

Der Erfindung liegt die Aufgabe zugrunde, einen verbesserten Linearantrieb vorzuschlagen, der in zweckmäßiger Weise die aus dem Stand der Technik bekannten Nachteile beseitigt. Weiterhin soll ein Linearantrieb mit einer besonders kompakten Bauweise angegeben werden, welche eine nahezu spielfreie Linearbewegung bei gleichzeitiger variabler und anpassbarer Bruchlast ermöglicht. Darüber hinaus soll mit dem erfindungsgemäßen Linearantrieb eine hohe Verstellgeschwindigkeit realisiert werden können.

Diese Aufgaben werden durch einen Linearantrieb mit den Merkmalen des Anspruchs 1, eine Längsverstelleinheit mit den Merkmalen des Patentanspruchs 20 sowie mit einem Kraftfahrzeug mit den Merkmalen des Patentanspruchs 21 gelöst. Weitere vorteilhafte Ausgestaltungen der Erfindung werden in den Unteransprüchen angegeben.

Der erfindungsgemäße Linearantrieb mit den Merkmalen des Patentanspruchs 1 weist eine Antriebswelle auf, die entlang einer Längsachse drehbar angeordnet ist. Darüber hinaus weist der Linearantrieb wenigstens zwei Vortriebzähne und wenigstens eine Zahnstange mit einer Mehrzahl von Zähnen auf, wobei die wenigstens zwei Vortriebzähne quer zur Längsachse hubbeweglich sind und mit der Antriebswelle derart trieblich gekoppelt sind, dass die wenigstens zwei Vortriebzähne mindestens eine zyklische Hubbewegung im Verlauf einer Umdrehung der Antriebswelle vornehmen können und zum Erzeugen eines Vortriebs in der Längsachse in die Zahnstange ein- und austauchen können bzw. anders gesagt, jeweils zwischen zwei Zähnen der Zahnstange in einen Zahnzwischenraum ein- und austauchen können. Erfindungsgemäß ist vorgesehen, dass die zyklische Hubbewegung der wenigstens zwei Vortriebzähne mit einem Phasenversatz erfolgt, wobei hier und im nachfolgenden unter einem Phasenversatz ein Ein- und Austauchen der wenigstens zwei Vortriebzähne in die Zahnstange zu unterschiedlichen Drehwinkeln der Antriebswelle verstanden wird.

Weiterhin wird hier und im Nachfolgenden unter einer zyklischen Hubbewegung ein Bewegungsablauf des jeweiligen Vortriebzahns verstanden, in welchem der Vortriebzahn von einem Ausgangspunkt einmal in die Zahnstange eintaucht und einmal vollständig aus der Zahnstange austaucht und zum Ausgangspunkt zurückkehrt und vice versa. Der jeweilige Vortriebzahn kann während einer Umdrehung der Antriebswelle eine oder mehrere vollständige Perioden bzw. Zyklen durchlaufen, wobei die Anzahl der Perioden bzw. Zyklen immer einer ganzen Zahl entspricht.

Beim Eintauchen des jeweiligen Vortriebzahns in die Zahnstange kommen die Zähne und die Vortriebzähne in einen Wirkkontakt, woraus ein Vortrieb in der Längsachse resultiert. Zu diesem Zweck taucht der jeweilige Vortriebzahn in die Zahnstange bzw. in den Zahnzwischenraum zwischen zwei Zähnen ein, wobei der Vortriebzahn und der Zahn der Zahnstange an sogenannten Reibflächen in Wirkkontakt kommen, woraus der Vortrieb resultiert. Hierzu ist es erforderlich, dass wenigstens die Zähne und/oder die Vortriebzähne Reibflächen aufweisen, die nach Art einer Keilfläche ausgebildet sind.

Gemäß einer vorteilhaften Ausgestaltung der vorliegenden Erfindung sind die wenigstens zwei Vortriebzähne in einem ersten Abstand in der Längsachse angeordnet und die Zähne der Zahnstange in einem zweiten Abstand entlang der Längsachse angeordnet, wobei der erste Abstand kleiner als der zweite Abstand ist oder der zweite Abstand kleiner als der erste Abstand ist. Mit anderen Worten, die ersten Abstände zwischen den Vortriebzähnen und die zweiten Abstände zwischen den Zähnen der mindestens einen Zahnstange müssen ungleich sein.

Der erste Abstand und der zweite Abstand sind jeweils auf die geometrische Mitte des jeweiligen Vortriebzahns bzw. des Zahns der Zahnstange bezogen und werden parallel zu der Längsachse gemessen. Durch die unterschiedliche Bemessung des ersten Abstandes und des zweiten Abstandes wird erreicht, dass während einer zyklischen Bewegung der wenigstens zwei Vortriebzähne mit einem Phasenversatz die jeweiligen Vortriebzähne in unterschiedlichen Relativpositionen zu den Zähnen der Zahnstange positioniert sind.

Es hat sich weiterhin als vorteilhaft erwiesen, wenn der jeweilige Vortriebzahn und/oder der Zahn der Zahnstange rechteckig, dreieckig, evolventen- oder sinusförmig ausgebildet sind bzw. ausgebildet ist. Bevorzugt wird eine dreieckige oder sinusförmige Zahnform. Weiterhin bevorzugt sind die Zähne der Zahnstange und/oder die Vortriebzähne parallel zu der Längsachse äquidistant angeordnet. Für den Fall, dass mehr als zwei Vortriebzähne vorgesehen sind, ist es ebenfalls bevorzugt, wenn diese Vortriebzähne parallel zu der Längsachse in wenigstens einer Reihe in einem äquidistanten Abstand angeordnet sind.

Auch hat es sich als vorteilhaft erwiesen, wenn der jeweilige Vortriebzahn und/oder die Zähne der Zahnstange symmetrisch ausgebildet sind. Durch eine symmetrische Ausbildung des jeweiligen Vortriebzahns und/oder des Zahns der Zahnstange können unter der Maßgabe einer gleich bleibenden Drehzahl der Antriebswelle gleiche Verstellgeschwindigkeiten in beide Vortriebrichtungen entlang der Längsachse realisiert werden.

Erfindungsgemäß weist der jeweilige Vortriebzahn eine größere, eine gleiche oder eine kleinere Zahnlänge und/oder eine größere Zahnhöhe als der jeweilige Zahn der Zahnstange auf. Durch eine Vergrößerung der Zahnhöhe und der Zahnlänge der Zähne der Zahnstange wird die Auflagefläche der Vortriebzähne auf den Zahnflanken bzw. der Reibfläche auf den Zahnflanken erhöht, wodurch eine gleichmäßigere Kraftübertragung zwischen der Zahnstange und den Vortriebzähnen bewerkstelligt werden kann. Ebenfalls ist es möglich, dass die Zahnhöhe und die Zahnlänge der Vortriebzähne größer ist als die Zahnhöhe und die Zahnlänge der Zähne der Zahnstange wodurch eine höhere Überdeckung erzeugt werden kann und höhere maximale Belastungen erreicht werden können und die Laufruhe der Antriebsvorrichtung verbessert werden kann. Demzufolge können durch die Wahl der Größenverhältnisse zwischen den Vortriebzähnen und den Zähnen der Zahnstange maximale Belastungen und unterschiedliche Laufeigenschaften eingestellt werden. Für den Fall, dass die Zahnlänge und die Zahnhöhe der Vortriebzähne kleiner ist als die Zahnlänge und die Zahnhöhe der Zähne der Zahnstange kann in einen Zahnzwischenraum zwischen zwei Zähnen der Zahnstange auch mehr als ein Vortriebzahn gleichzeitig ein- bzw. austauchen.

Weiterhin hat es sich als vorteilhaft erwiesen, wenn die wenigstens zwei Vortriebzähne und die Zähne der Zahnstange eine korrespondierende Zahnform aufweisen. Unter einer korrespondierenden Zahnform ist zu verstehen, dass der jeweilige Vortriebzahn beim vollständigen Eintauchen in den Zahnzwischenraum zwischen zwei Zähnen der Zahnstange mit seiner den Zähnen der Zahnstange zugewandten Reibfläche flächig an zumindest einer der Reibflächen der Zähne der Zahnstange anliegen kann. Insbesondere hat es sich als vorteilhaft erwiesen, wenn sowohl der jeweilige Vortriebzahn als auch der mindestens eine Zahn der Zahnstange gleiche Zahnflankenwinkel aufweisen. In diesem Zusammenhang wird angemerkt, dass die Reibfläche der jeweiligen Zahnflanken nicht zwangsweise einer Ebene entsprechen muss, sondern ebenfalls als eine - bevorzugt nach außen - gewölbte Fläche ausgebildet sein kann.

Gemäß einer vorteilhaften Ausgestaltung des erfindungsgemäßen Linearantriebs kann vorgesehen sein, dass der Phasenversatz der zyklischen Hubbewegung der wenigstens zwei Vortriebzähne in Bezug auf eine Umdrehung $\varphi$ der Antriebswelle mindestens $1/256\varphi$, weiter bevorzugt mindestens $1/128\varphi$, $1/64\varphi$, $1/32\varphi$, $1/16\varphi$ oder $1/8\varphi$ und bevorzugt kleiner oder gleich $\frac{1}{2} \varphi$ beträgt. Bevorzugt beträgt der Phasenversatz weniger als $1/2 \varphi$, insbesondere $\frac{1}{3} \varphi$ oder $1/4 \varphi$. Bevorzugt kann für den Phasenversatz folgendes gelten: 360°/(Anzahl der Vortriebzähne)< Phasenversatz < 360°-(360°/(Anzahl der Vortriebzähne).

Es kann vorteilhaft sein, wenn der mathematische Kehrwert des jeweiligen Bruchteils (1/n) des Phasenversatzes die Mindestanzahl k der vorzusehenden Vortriebzähne vorgibt, nämlich k = (n/i)-1, wobei eine Anzahl i die Anzahl der zyklischen Hubbewegungen eines Vortriebzahns bei einer Umdrehung $\varphi$ der Antriebswelle ist. Beispielsweise sind bevorzugt wenigstens 2 Vortriebzähne vorzusehen, wenn der Phasenversatz zwischen den Vortriebzähnen $\frac{1}{3} \varphi$ beträgt und der Vortriebzahn pro Umdrehung eine vollständige Hubbewegung vollzieht.

Darüber hinaus hat es sich als vorteilhaft erwiesen, wenn die Antriebswelle als Kurbel- oder Nockenwelle ausgebildet ist und mindestens ein Führungsmittel aufweist, dass die zyklische Hubbewegung bei der Umdrehung der Antriebswelle vorgibt. Weiterhin ist es bevorzugt, wenn wenigstens zwei Führungsmittel vorgesehen sind, die in der Längsachse beabstandet zueinander angeordnet sind, wobei jedes der mindestens zwei Führungsmittel wenigstens einem Vortriebzahn zugeordnet ist.

Nach Maßgabe einer weiteren vorteilhaften Ausgestaltung der vorliegenden Erfindung sind die mindestens zwei Führungsmittel in einem Winkel um die Längsachse verdreht angeordnet, wobei der Winkel den Phasenversatz zwischen den zyklischen Hubbewegungen der mindestens zwei Vortriebzähne vorgibt.

Gemäß einer weiteren vorteilhaften Ausgestaltung der vorliegenden Erfindung weisen die Führungsmittel eine Kontaktfläche auf, wobei die Kontaktfläche in der Längsachse einen ebenen, konkaven, konvexen, sinusförmigen oder einen zick-zackförmigen Verlauf aufweisen kann. Besonders bevorzugt ist es, wenn die Kontaktfläche des Führungsmittels einen Formschluss mit dem jeweiligen Vortriebzahn bzw. dessen korrespondierender Kontaktfläche bewerkstelligt, wodurch Axialkräfte von dem jeweiligen Vortriebzahn auf die Antriebswelle übertragen werden können.

Das mindestens eine Führungsmittel kann eine Nockenwellenscheibe umfassen, wobei weiterhin bevorzugt die Nockenwellenscheibe im Querschnitt als ein Exzenter, eine Ellipse, ein Polygon, ein Tetragon, ein Pentagon, ein Hexagon oder aus einer Kombination dieser Formen ausgebildet ist. Die Nockenwellenscheibe kann demnach ein oder mehrere Maxima des Radius über den Umfang aufweisen. Ein Exzenter weist typischerweise ein Maximum auf, wodurch der mit der Nockenwellenscheibe in Wirkverbindung stehende Vortriebzahn bei einer Umdrehung der Antriebswelle eine vollständige zyklische Hubbewegung vornimmt. Eine Anzahl i der Maxima gibt einerseits die Zahl der vollständigen zyklischen Hubbewegungen im Verlauf einer Umdrehung der Antriebswelle an und andererseits kann die Anzahl i zur Bestimmung der Mindestzahl n der vorzusehenden Vortriebzähne verwendet werden.

Weiterhin hat es sich als vorteilhaft erwiesen, wenn der jeweilige Vortriebzahn gefedert gegen die Antriebswelle gedrückt wird und/oder mittels eines Pleuels mit der Antriebswelle trieblich gekoppelt ist.

Gemäß einer weiteren vorteilhaften Ausstattung der vorliegenden Erfindung kann der jeweilige Vortriebzahn über einen Gleitkontakt oder einen einfachen oder mehrfachen Rollenkontakt mit der Antriebswelle trieblich gekoppelt sein. Auch ist es bevorzugt, wenn der jeweilige Vortriebzahn mittels eines Einfach-Rollenkontakts, eines Zweifach-Rollenkontakts oder eines Vierfach-Rollenkontakts mit der Antriebswelle gekoppelt ist. Die Kontaktfläche des Vortriebzahns oder die Kontaktfläche der Antriebswellen kann an mindestens einer Kontaktrolle des jeweiligen Rollenkontakts abrollen, wodurch Reibverluste sowie Verschleiß an der jeweiligen Kontaktfläche reduziert werden können.

Nach Maßgabe einer weiteren Ausgestaltung der vorliegenden Erfindung können die wenigstens zwei Vortriebzähne in einer Reihe entlang einer Achse, welche parallel zu der Längsachse verläuft, angeordnet sein.

Insbesondere ist es bevorzugt, wenn um die Längsachse wenigstens zwei Reihen mit Vortriebzähnen angeordnet sind, wobei in der jeweiligen Reihe wenigstens eine Zahnstange zugeordnet sein kann, in welche die jeweiligen Vortriebzähne zum Erzeugen eines Vortriebs ein- und austauchen können.

Nach Maßgabe einer Weiterbildung der vorliegenden Erfindung können die wenigstens zwei Zahnstangen zueinander um einen Versatz angeordnet sein. Der Versatz beschreibt dabei einen Abstand, gemessen in Richtung der Längsachse, zwischen den Zahnspitzen der mindestens zwei Zahnstangen. Für den Fall, dass der Versatz null beträgt, sind die mindestens zwei Zahnstangen spiegelsymmetrisch oder liniensymmetrisch zu der Längsachse angeordnet, währenddessen bei einem Versatz größer null die mindestens zwei Zahnstangen in Bezug auf die Längsachse asymmetrisch angeordnet sind. In einer bevorzugten Ausgestaltung kann der Versatz einen halben Abstand, ein Viertel, oder ein Drittel des Abstandes zwischen zwei Zähnen der jeweiligen Zahnstange betragen, wobei bevorzugt der Abstand zwischen zwei Zähnen der mindestens zwei Zahnstangen gleich groß gewählt sein sollte.

Gemäß einer weiteren vorteilhaften Ausgestaltung des vorliegenden erfindungsgemäßen Linearantriebs ist ein Schlitten vorgesehen, in dem die wenigstens zwei Vortriebzähne und die Antriebswelle gelagert angeordnet sind. Bevorzugt werden die wenigstens zwei Vortriebzähne quer zur Längsachse nach Art eines Gleitlagers gehalten, wodurch der durch die wenigstens zwei Vortriebzähne erzeugte Vortrieb auf den Schlitten übertragen werden kann. Der Schlitten kann ein- oder mehrteilig ausgebildet sein und Mittel aufweisen, durch die er linearbeweglich zu der wenigstens einen Zahnstange gehalten wird.

Eine Weiterbildung des Linearantriebs sieht vor, dass ein Antrieb vorgesehen ist. Bevorzugt ist der Antrieb ein elektrischer Motor, durch den die Antriebswelle angetrieben werden kann.

Weiterhin ist es vorteilhaft, wenn zwischen dem Antrieb und der Antriebswelle ein Getriebe angeordnet ist, wobei besonders bevorzugt zwischen dem Antrieb und der Antriebswelle ein Planetengetriebe angeordnet sein kann.

Der Antrieb und/oder das Getriebe können bzw. kann gemäß einer Ausgestaltung des Linearantriebs in dem Schlitten angeordnet sein. Die Versorgung des Antriebs in dem Schlitten mit Energie und/oder mit Steuersignalen kann über eine Schleppkette mit entsprechenden elektrischen Leitungen erfolgen.

Darüber hinaus bezieht sich die vorliegende Erfindung auf eine Längsverstelleinheit mit einem erfindungsgemäßen Linearantrieb.

Ein weiterer Aspekt der vorliegenden Erfindung betrifft ein Kraftfahrzeug mit wenigstens einem solchen erfindungsgemäßen Linearantrieb.

Nachfolgend wird unter Bezugnahme auf die begleitenden Zeichnungen ein erfindungsgemäßes Ausführungsbeispiel sowie Weiterbildungen der vorliegenden Erfindung im Detail beschrieben. Es zeigen:

Figur 1    eine perspektivische Darstellung eines erfindungsgemäßen Linearantriebs, aufweisend einen in einem Zahnstangengehäuse angeordneten Schlitten mit wenigstens zwei Vortriebzähnen, welche trieblich mit einer Antriebswelle gekoppelt sind und bei einer Umdrehung der Antriebswelle in einer zyklischen Hubbewegung zum Erzeugen eines Vortriebs in wenigstens eine Zahnstange des Zahnstangengehäuses eintauchen,

Figur 2    eine Draufsicht auf den erfindungsgemäßen Linearantrieb gemäß Figur 1,

Figur 3   eine Draufsicht gemäß Figur 1, wobei die Komponenten in dem Schlitten ersichtlich sind,

Figur 4   eine perspektivische und detaillierte Darstellung des Schlittens gemäß Figur 3,

Figur 5   eine Detailansicht der Komponenten des Schlittens in der Perspektive gemäß Figur 4,

Figur 6   eine vereinfachte Darstellung der Antriebswelle des Vortriebzahns und einer Zahnstange,

Figur 7   eine vereinfachte Darstellung der Antriebswelle des Vortriebzahns und einer Zahnstange gemäß Figur 6, wobei auf diametralen Seiten der Antriebswelle jeweils eine Reihe mit einem Vortriebzahn und einer Zahnstange angeordnet ist,

Figur 8   eine vereinfachte Darstellung der Antriebswelle des Vortriebzahns und einer Zahnstange gemäß den Figuren 6 oder 7, wobei umfangssymmetrisch um die Antriebswelle herum vier Vortriebzähne in einer Ebene angeordnet sind,

Figur 9   eine vergrößerte perspektivische Darstellung der Antriebswelle, wobei ersichtlich ist, dass die Antriebswelle entlang einer Längsachse als Nockenwelle ausgebildet ist und eine Mehrzahl von Nockenwellenscheiben aufweist, durch die die zyklische Hubbewegung der Vortriebzähne bei einer Umdrehung der Antriebswelle vorgegeben wird,

Figur 10a-e   eine schematische Darstellungen des Querschnitts der Nockenwellenscheiben,

Figur 11a-b   schematische Darstellungen von Kontaktrollen, durch die die zyklische Hubbewegung der Vortriebzähne bei einer Umdrehung der Antriebswelle vorgegeben wird,

Figur 12a-e   schematische Darstellungen unterschiedlicher Ausgestaltungen von Kontaktflächen der Führungsmittel,

Figur 13a-b   schematische Darstellungen unterschiedlicher Ausgestaltungen der Zähne der Zahnstange,

Figur 14a-c   schematische Darstellungen unterschiedlicher Größenverhältnisse der Zähne der Zahnstange und der Vorschubzähne, und

Figur 15a-b   schematische Darstellungen unterschiedlicher Anordnungen der Zahnstangen.

Nachfolgend werden gleiche oder funktional gleiche Bauteile mit gleichen Bezugzeichen gekennzeichnet. Der Übersichtlichkeit halber sind in den einzelnen Figuren nicht alle gleichen oder funktional gleichen Teile mit einer Bezugsziffer versehen.

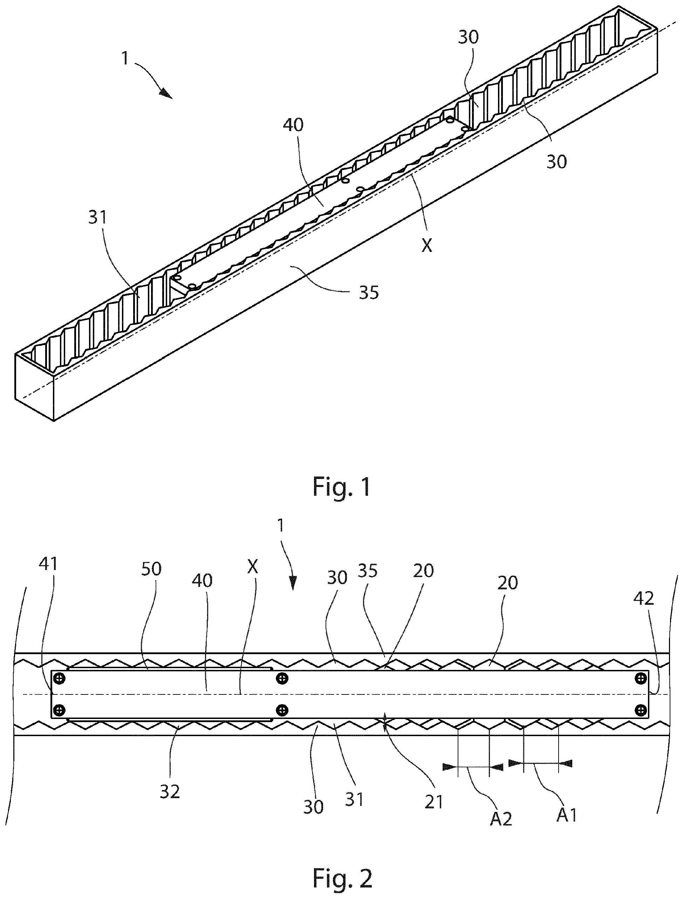

Figur 1 zeigt einen erfindungsgemäßen Linearantrieb 1 aufweisend ein Zahnstangengehäuse 35 und einen Schlitten 40, der entlang einer Längsachse X zwischen zwei Zahnstangen 30 beweglich gelagert gehalten ist. Der Linearantrieb 1 kann in einer (nicht dargestellten) Längsverstelleinheit 2 zum Verstellen eines (nicht dargestellten) Sitzes in einem (nicht dargestellten) Kraftfahrzeug 3 verwendet werden.

Das Zahnstangengehäuse 35 kann wie im dargestellten Ausführungsbeispiel quaderförmig ausgebildet sein und einen Raum 38 - zumindest teilweise - umschließen. Auf zwei dem Raum 38 zugewandten diametralen Seiten ist jeweils eine der Zahnstangen 30 angeordnet, die jeweils aus einer Vielzahl von Zähnen 31 gebildet ist, die bevorzugt äquidistant entlang der Längsachse X angeordnet sind. Zwischen jeweils zwei Zähnen 31 wird ein entsprechender Zahnzwischenraum 32 ausgebildet.

Das Zahnstangengehäuse 35 kann derart ausgestaltet sein, dass es in der Längsachse X in einem ersten Endbereich und in einem zweiten Endbereich einen Anschlag bildet, durch den der maximale Verfahrweg des Schlittens 40 innerhalb des Raums 38 vorgegeben wird.

In dem dargestellten Ausführungsbeispiel sind die Zähne 31 der zwei Zahnstangen 30 identisch ausgebildet, jedoch können die Zähne 31 der Zahnstangen 30 sowohl unterschiedliche Zahnformen als auch unterschiedliche Abstände A2 aufweisen.

Der jeweilige Abstand A2 wird, wie in Figur 2 dargestellt ist, jeweils bezogen auf die geometrische Mitte des jeweiligen Zahns 31 gemessen. Bei symmetrischen Zähnen 31 ist typischerweise eine Zahnspitze in der geometrischen Mitte ausgebildet, von der sich zwei symmetrische Zahnflanken als Reibflächen 36 erstrecken. In dem dargestellten Ausführungsbeispiel schließen die beiden Flanken einen Winkel von ca. 135° ein, wobei die Flanken bevorzugt einen Winkel von kleiner oder gleich 180° und größer als 30° einschließen.

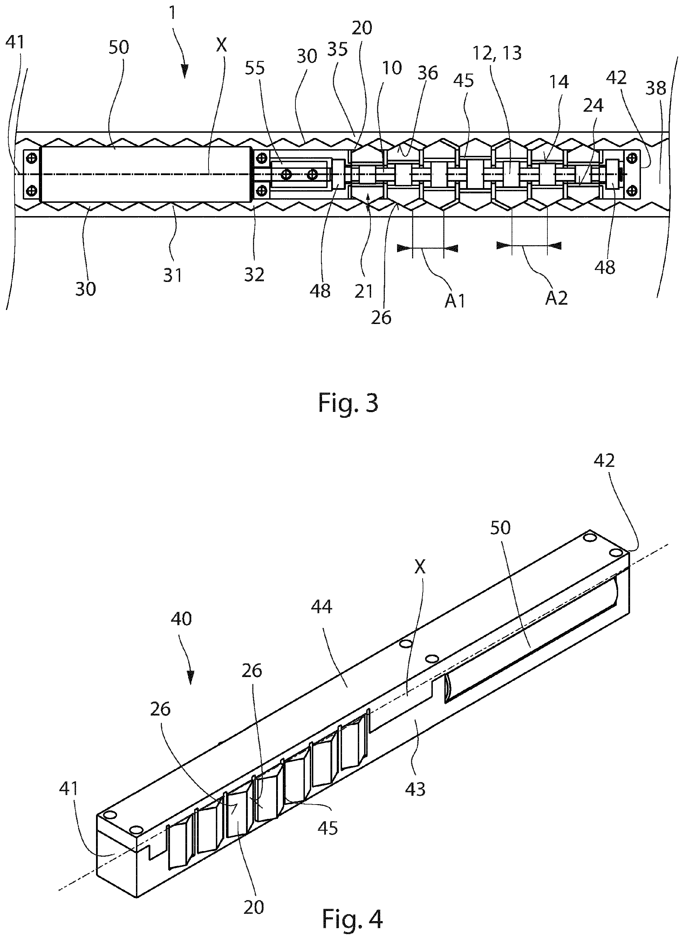

Der Schlitten 40 kann, wie in Figur 4 dargestellt ist, ein zweiteiliges Gehäuse aus einem ersten Gehäuseteil 43 und einem zweiten Gehäuseteil 44 aufweisen. Das Gehäuse weist einen ersten Endbereich 41 und einen zweiten Endbereich 42 auf, die als Endanschlag mit dem Zahnstangengehäuse 35 zusammenwirken können.

Figur 3 zeigt, dass in dem Gehäuse des Schlittens 40 eine Antriebswelle 10 koaxial zu der Längsachse X angeordnet ist, die mittels Lager 48 in der Längsachse X drehbar gelagert gehalten ist. Die Antriebswelle 10 kann mittels eines Getriebes 55 mit einem Antrieb 50 gekoppelt sein, wodurch die Antriebswelle 10 durch den Antrieb 50 in eine Drehbewegung um die Längsachse X versetzt werden kann.

Der Antrieb 50 kann bevorzugt ein elektrischer Antrieb sein und weiterhin bevorzugt mit dem als Planetengetriebe ausgebildeten Getriebe 55 mit der Antriebswelle 10 gekoppelt sein. Das Getriebe 55 kann eine Drehzahl des Antriebs 50 in eine Drehzahl der Antriebswelle über- oder untersetzen.

Die Antriebswelle 10 weist eine Mehrzahl von Führungsmittel 12 auf, die zwischen den beiden Lagern 48 zueinander beabstandet angeordnet sind. Die Führungsmittel 12 sind jeweils in einer Ebene orthogonal zu der Längsachse X angeordnet und können eine - wie im Nachfolgenden noch detailliert beschrieben werden wird - exzentrische, exzenterförmige, elliptische oder polygonförmige Ausgestaltung aufweisen. Die Antriebswelle 10 bildet eine Art Nockenwelle und die Führungsmittel 12 werden durch Nockenwellenscheiben 13 gebildet.

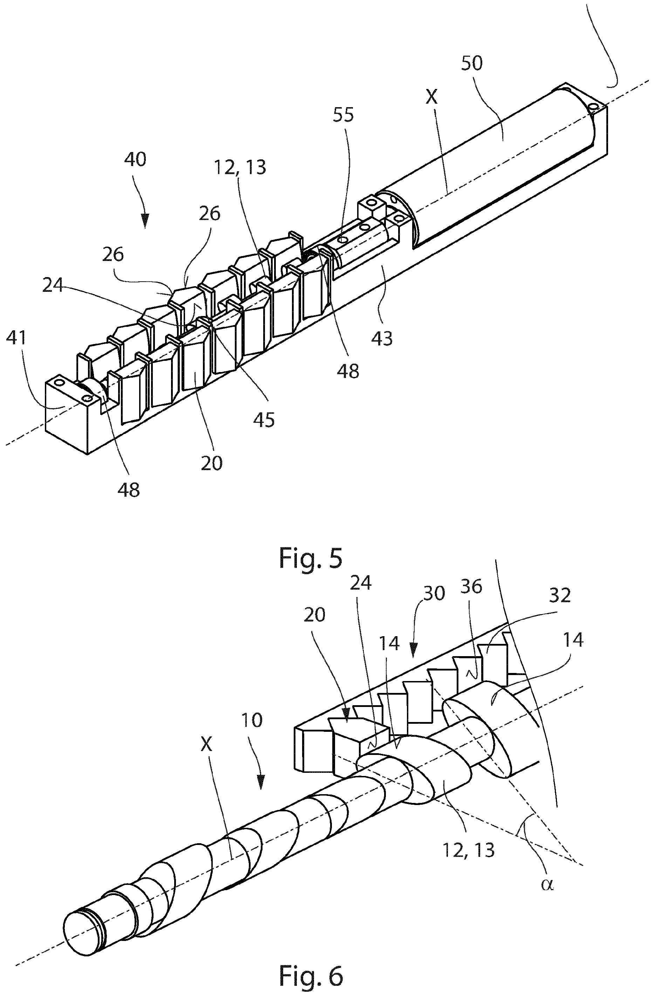

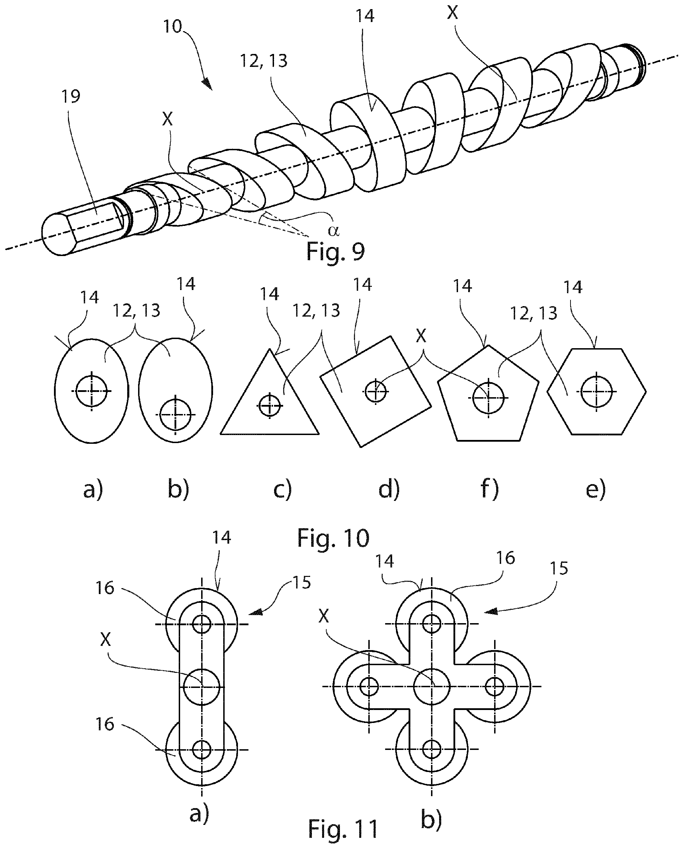

Die Führungsmittel 12 sind, wie insbesondere den Figuren 6 und 9 zu entnehmen ist, entlang der Längsachse X jeweils zueinander in einem Winkel $\alpha$ verdreht angeordnet, wobei im vorliegenden Ausführungsbeispiel die als Ellipse ausgebildeten Führungsmittel 12 bzw. die Nockenwellenscheiben 13 um die Längsachse X um jeweils den Winkel $\alpha$ = 22,5° verdreht angeordnet sind.

Weiter in Bezug auf Figur 3 ist ersichtlich, dass in dem Gehäuse jeweils mehrere Führungsausnehmungen 45 angeordnet sind, welche quer zur Längsachse X jeweils mittig und auf diametralen Seiten zu den Führungsmitteln 12 bzw. den Nockenwellenscheiben 13 angeordnet sind.

In die jeweilige Führungsausnehmung 45 ist ein Vortriebzahn 20 eingesetzt, der in der Führungsausnehmung 45 beweglich ist und wie mit dem Doppelpfeil gekennzeichnet eine Hubbewegung 21 vornehmen kann, welche radial oder sekantial zu der Längsachse X verläuft.

Symmetrisch zu der Längsachse X sind um die Antriebswelle 10 zwei Reihen mit jeweils sieben Vortriebzähnen 20 angeordnet. Die Reihen sind parallel zu der Längsachse X ausgerichtet. Die Führungsausnehmung 45 bildet für den jeweiligen Vortriebzahn 20 ein Lager, wodurch der Vortriebzahn 20 leichtgängig quer zur Längsachse X hubbeweglich gelagert ist und durch die Führungsausnehmung 45 hindurch in einen der Zahnzwischenräume 32 der Zahnstange 30 ein- und austauchen kann.

Im ausgetauchten Zustand kann der jeweilige Vortriebzahn 20 entlang der Längsachse X über eine Zahnspitze eines Zahns 31 der Zahnstange geführt werden.

Der jeweilige Vortriebzahn 20 kann bevorzugt an die Form der Zähne 31 der Zahnstange 30 angepasst sein, wodurch die Zahnflanken des Vortriebzahns 20 im vollständig in den Zahnzwischenraum 32 eingetauchten Zustand des Vortriebzahns 20 flächig an den Flanken der Zähne 31 anliegen. Die Breite des jeweiligen Vortriebzahns 20 kann dem Abstand zwischen zwei Zähnen 31 A2 entsprechen. Es ist jedoch wesentlich, dass ein Abstand A1 zwischen zwei Vortriebzähnen 20 größer oder kleiner ist als der Abstand A2 zwischen zwei Zähnen 31. Somit ist A2 < A1 oder bevorzugt A1 > A2. Mit anderen Worten muss A1 ≠ A2 sein.

Der jeweilige Vortriebzahn 20 umfasst weiterhin einen Zahnfuß 22 mit einer Kontaktfläche 24. Der Zahnfuß 22 kann einen konstanten Querschnitt und entsprechende Flächen aufweisen, an denen er reibungsminimiert an der Führungsausnehmung 45 bei der zyklischen Hubbewegung lineargeführt entlang gleiten kann.

Die Antriebswelle 10 und die Vortriebzähne 20 sind derart trieblich miteinander gekoppelt, dass der jeweilige Vortriebzahn 20 bei einer Umdrehung $\varphi$ der Antriebswelle 10 mindestens eine zyklische Hubbewegung 21 vornimmt. Die zyklische Hubbewegung 21 kann beispielsweise als eine vollständige Periode einer Sinuskurve beschrieben werden, wobei der jeweilige Vortriebzahn 20 innerhalb einer zyklischen Hubbewegung 21 einmal in die Zahnstange 30 bzw. einen Zahnzwischenraum 32 eintaucht, einmal vollständig austaucht und in die Ausgangslage zurückkehrt. Allerdings ist es im Sinne dieser Erfindung ebenfalls möglich, dass der jeweilige Vortriebzahn 20 während einer Umdrehung $\varphi$ mehrere zyklische Hubbewegungen 21 vornimmt, wie nachfolgend erläutert werden wird.

Durch die um die Längsachse X im Winkel $\alpha$ verdrehten Führungsmittel 12 erfolgt die zyklische Hubbewegung 21 der jeweiligen Vortriebzähne 20 phasenversetzt, wodurch die Vortriebzähne 20 zu unterschiedlichen Drehwinkeln der Antriebswelle 10 in die jeweilige Zahnstange 30 ein- und austauchen. Mit anderen Worten greifen die Vortriebzähne 20 bei einer konstanten Drehzahl der Antriebswelle 10 zu unterschiedlichen Zeitpunkten in einen Zahnzwischenraum 32 ein.

Die Führungsmittel 12 weisen eine Kontaktfläche 14 auf, welche die dem Vortriebzahn 20 zugewandte Außenseite bildet. Die Kontaktfläche 14 und die Kontaktfläche 24 des jeweiligen Vortriebzahns 20 gleiten aneinander ab, wobei durch die Kontaktfläche 14 eine radial oder sekantial wirkende Kraft auf den jeweiligen Vortriebzahn 20 aufgebracht wird, durch die der Vortriebzahn 20 durch die Führungsausnehmung 45 gelagert in Richtung der Zahnstange 30 geschoben wird.

Die Funktionsweise des Linearantriebs 1 beruht auf der Tatsache, dass der jeweilige Vortriebzahn 20 beim Eintauchen in einen Zahnzwischenraum 32 der Zahnstange 30 in Reibkontakt mit einer Flanke eines der Zähne 31 der Zahnstange 30 kommt. Beim Eintauchen des jeweiligen Vortriebzahns 20 kommt eine erste Flanke bzw. eine der Reibflächen 26 in Kontakt mit der Flanke bzw. der Reibfläche 36 eines der Zähne 31. Die beiden Reibflächen 26, 36 erzeugen aufgrund der keilförmigen Ausgestaltung einen in der Längsachse X gerichteten Vortrieb, durch den der Schlitten 40 entlang der Längsachse X in dem Raum verschoben wird. Sobald einer der Vortriebzähne 20 vollständig in die Zahnstange 30 eingetaucht ist, folgt phasenversetzt ein weiterer Vortriebzahn 20, der versetzt zu der Mitte eines weiteren Zahnzwischenraums 32 angeordnet ist. Der weitere Vortriebzahn 20 taucht in einen weiteren Zahnzwischenraum 32 unter Erzeugung eines Vortriebs ein. Derweilen taucht der zuerst vollständig in den Zahnzwischenraum 32 eingetauchte Vortriebzahn 20 entweder gefedert oder durch die kontaktierenden Reibflächen 26, 36 aus dem Zahnzwischenraum 32 aus. Weitere Vortriebzähne 20 können versetzt oder zeitgleich folgen, wodurch ein weiterer Vortrieb erzeugt werden kann.

Im vorliegenden Ausführungsbeispiel gemäß den Figuren 1-5 sind die Führungsmittel 12 elliptisch ausgebildet, wodurch der jeweilige Vortriebzahn 20 bei einer Umdrehung φ zwei vollständige Zyklen oder Perioden durchläuft. Entsprechend taucht der jeweilige Vortriebzahn 20 bei einer Umdrehung φ der Antriebswelle 10 zweimal in die Zahnstange 30 ein und wieder aus. Durch den Winkelversatz von 22,5° zwischen zwei in der Längsachse X beabstandeten Führungsmittel 12 beträgt der Phasenversatz Δφ bezogen auf eine Umdrehung φ der Längsachse X 1/32φ. Anders gesagt, muss die Antriebswelle 10 um 11,25° verdreht werden, damit nach dem Eintauchen eines ersten Vortriebzahns 20 ein zweiter Vortriebzahn 20 in einen weiteren Zahnzwischenraum 32 eintaucht.

Der Linearantrieb 1 weist wenigstens zwei Vortriebzähne 20 auf, welche, wie in Figur 6 gezeigt, in einer einzigen Reihe parallel zu der Längsachse X angeordnet sein können.

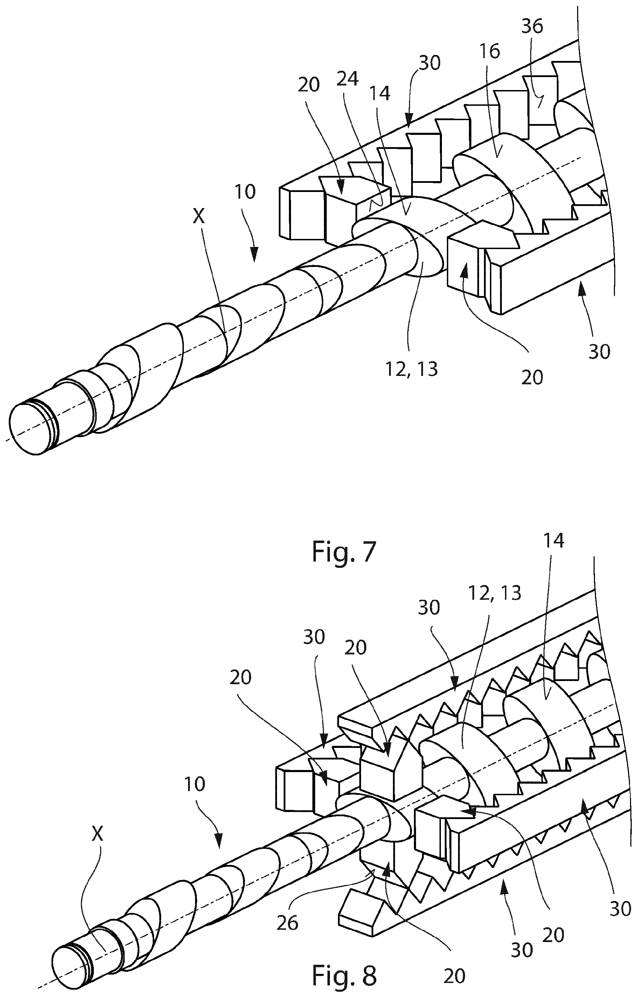

Wie bereits im Zusammenhang mit den Figuren 1-5 erläutert wurde, können allerdings die Vortriebzähne 20 in zwei beabstandeten Reihen gemäß Figur 7 angeordnet sein, wobei der jeweiligen Reihe von Vortriebzähnen 20 eine Zahnstange 30 zugeordnet ist. Die zwei Reihen können beliebig um die Längsachse X angeordnet sein, bevorzugt ist jedoch eine umfangssymmetrische Anordnung.

Figur 8 ist eine Weiterbildung des Linearantriebs 1 zu entnehmen, wobei orthogonal bzw. quer zur Längsachse X in einer Ebene vier Vortriebzähne 20 angeordnet sind, die jeweils in eine Zahnstange 30 ein- und austauchen können.

Die Figuren 10a-10e zeigen unterschiedliche Querschnitte der Führungsmittel 12, wobei die Führungsmittel 12 gemeinsam haben, dass der Verlauf des Radius gemessen zur Längsachse X über den Umfang mindestens ein lokales Minimum und ein lokales Maximum aufweist. Der elliptische Querschnitt gemäß Figur 10a weist zwei Maxima und zwei Minima auf, wodurch die mit dem derart ausgestalteten Führungsmittel 12 in Wirkkontakt stehenden Vortriebzähne während einer Umdrehung φ der Antriebswelle 10 zwei zyklische Hubbewegungen 21 vornehmen, währenddessen der exzentrische Querschnitt gemäß Figur 10b nur zu einer zyklischen Hubbewegung 21 bei einer Umdrehung φ der Antriebswelle 10 führt. Die Polygonquerschnitte gemäß den Figuren 10c-10e haben mehrere Ecken, wobei die Anzahl der Ecken die Anzahl der zyklischen Hubbewegung 21 bei einer Umdrehung der Antriebswelle 10 vorgibt.

Alternativ zu einer Nockenwelle mit Nockenwellenscheiben 13 kann die Antriebswelle 10 Rollenkontakte 15 aufweisen, welche durch radial zu der Längsachse X angeordnete Kontaktrollen 16 gebildet werden. Die jeweilige Kontaktrolle 16 bildet die Kontaktfläche 14, welche jedoch im Gegensatz zu den Nockenscheiben an der Kontaktfläche 24 des jeweiligen Vortriebzahns 20 abrollt. Die Rollenkontakte 15 können als zweifach-Rollenkontakt 15 gemäß Figur 11a, oder als Mehrfach-Rollenkontakt 15, beispielsweise als Vierfach-Rollenkontakt 15 gemäß Figur 11b ausgebildet sein, wobei die Anzahl der Kontaktrollen 16 beliebig gewählt werden kann.

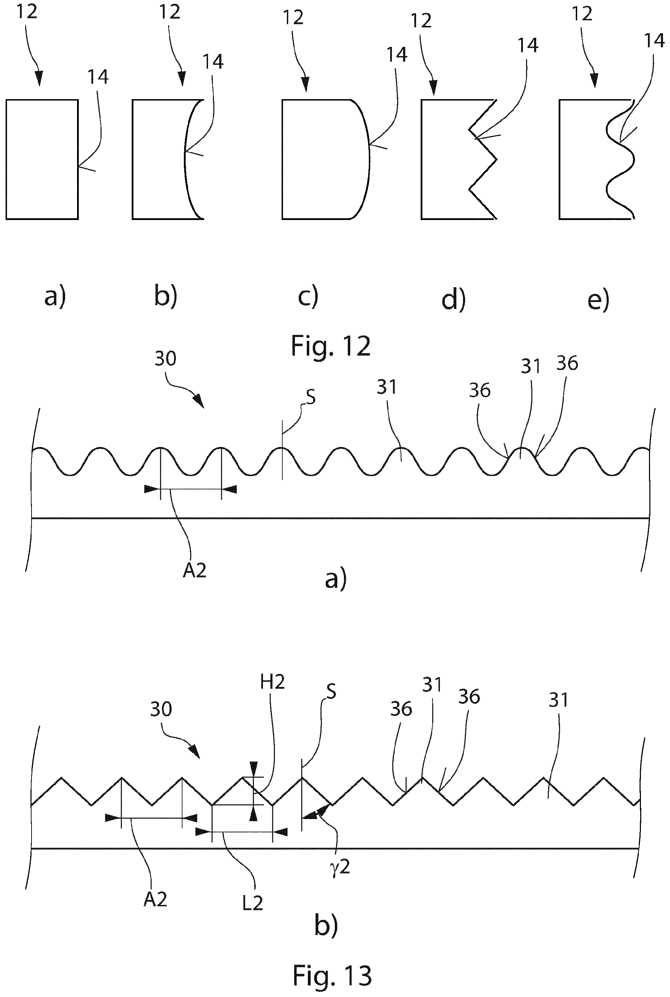

Die Figuren 12a-e zeigen unterschiedliche Ausgestaltungen der Kontaktflächen 14 des Führungsmittels 12, wobei die Kontaktflächen gemäß den Figuren 12b-e eine konkave, eine konvexe, eine zickzack- oder eine sinusförmige Ausgestaltung aufweisen können, wodurch ein partieller Formschluss zwischen dem jeweiligen Vortriebzahn 20 und dem Führungsmittel 12 bewerkstelligt werden kann, durch welchen eine Axialkraft in der Längsachse X von dem Vortriebzahn 20 auf die Antriebswelle 10 übertragen werden kann.

Auch können sowohl die Zähne 31 der Zahnstange 30, als auch die Vortriebzähne 20 (nicht dargestellt) unterschiedliche Zahngeometrien aufweisen. Beispielhaft sind in den Figuren 13a die Zähne 31 sinusförmig und in Figur 13b zickzack-förmig mit zwei um eine Symmetrielinie S symmetrischen Flanken ausgebildet. Auch können entweder die Zähne 31 oder die Vortriebzähne 20 rechteckig sein, wobei zumindest die Zähne 31 der Zahnstange 30 oder die Vortriebzähne 20 zum Erzeugen eines Vortriebs eine Reibfläche 26, 36 aufweisen, die zum Erzeugen eines Vortriebs keilförmig ausgebildet ist.

Sobald ein Vortriebzahn 20 in einen Zahnzwischenraum 32 eintaucht, wird ein Formschluss zwischen der Zahnstange 30 und dem Schlitten 40 bewerkstelligt, wodurch der Schlitten 50 näherungsweise spielfrei in der Längsachse X festgestellt ist. Die Vortriebzähne 20 verkeilen demnach den Schlitten 50 in der Längsachse X und die mit der Zahnstange 30 in Eingriff stehenden Vortriebzähne 20 geben die Bruchlast vor, welche sowohl durch die Anzahl der Vortriebzähne 20 in einer Reihe als auch durch die Anzahl der Reihen beliebig ausgelegt werden kann.

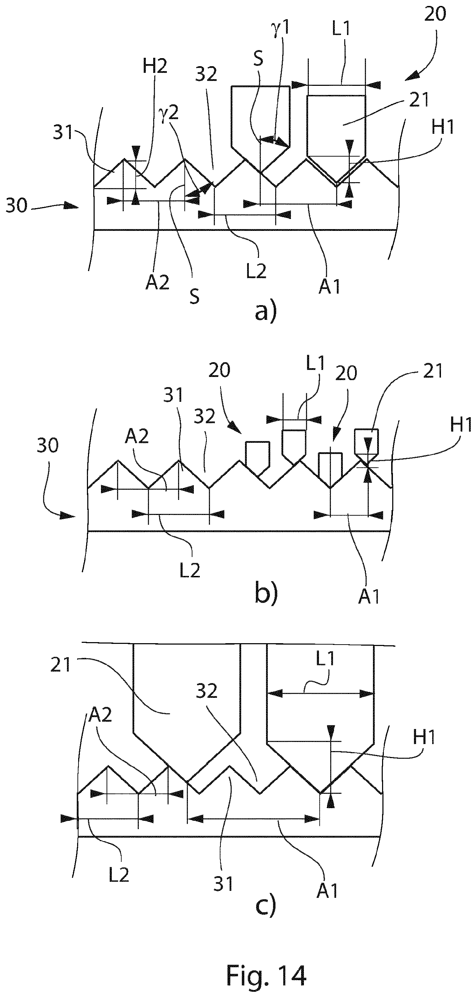

Figuren 14a bis 14c zeigen unterschiedliche Größenverhältnisse der Vortriebzähne 20 und der Zähne 31 der Zahnstange 30. Der jeweilige Vortriebzahn 20 weist eine Zahnlänge L1, eine Zahnhöhe H1 und einen Zahnflankenwinkel $\gamma 1$ auf. Ebenso weisen die Zähne 31 der Zahnstange 30 eine Zahnlänge L2, eine Zahnhöhe H2 und einen Zahnflankenwinkel $\gamma 2$ auf, wobei typischer Weise die Zahnflankenwinkel $\gamma 1$, $\gamma 2$ gleich gewählt sein können, damit zwischen den Zahnflanken der Vortriebzähne 20 und der Zahnstange 30 ein Flächenkontakt ausgebildet sein kann. Angemerkt sei jedoch, dass mindestens eine der Zahnflanken auch eine gewölbte Form aufweisen kann.

Figur 14a zeigt schematisch beispielhafte Größenverhältnisse zwischen dem Vortriebzahn 20 und den Zähnen 31 der Zahnstange 30 gemäß den Figuren 1-3. Hierbei ist ersichtlich, dass der Abstand A1 zwischen den Vortriebzähnen 20 größer ist als der Abstand A2 der Zähne 31 der Zahnstange 30 und die Zahnhöhen H1, H2 sowie die Zahnlängen L1, L2 näherungsweise gleich groß sind.

Eine Vergrößerung der Zähne 31 der Zahnstange 30 im Verhältnis zu den Vortriebzähne 20 ist Figur 14b zu entnehmen, wobei ebenfalls aus dieser Figur ersichtlich ist, dass mehrere Vortriebzähne 20 in einen Zahnzwischenraum 32 zwischen zwei Zähnen 31 eintauchen können. Durch die Vergrößerung der Zähne 31 der Zahnstange 30 wird die Auflagefläche der Vortriebzähne 20 auf den Zahnflanken 36 der Zähne 31 erhöht, wodurch eine gleichmäßigere Kraftübertragung erfolgen kann.

Eine höhere Überdeckung zwischen den Vortriebzähnenn 20 und den Zahnflanken 36 der Zähne 31 der Zahnstange 30 kann durch eine Vergrößerung der Zahnlänge L1 erfolgen, bzw. durch eine Vergrößerung der Zahnhöhe H1 erfolgen, wonach gilt: A1 > A2, L1 > L2 und H1 > H2. Durch eine höhere Überdeckung zwischen den Vortriebzähnen 20 und den Zahnflanken 36 kann eine höhere maximale Belastung erreicht werden und die Laufruhe der Antriebsvorrichtung 1 erhöht werden.

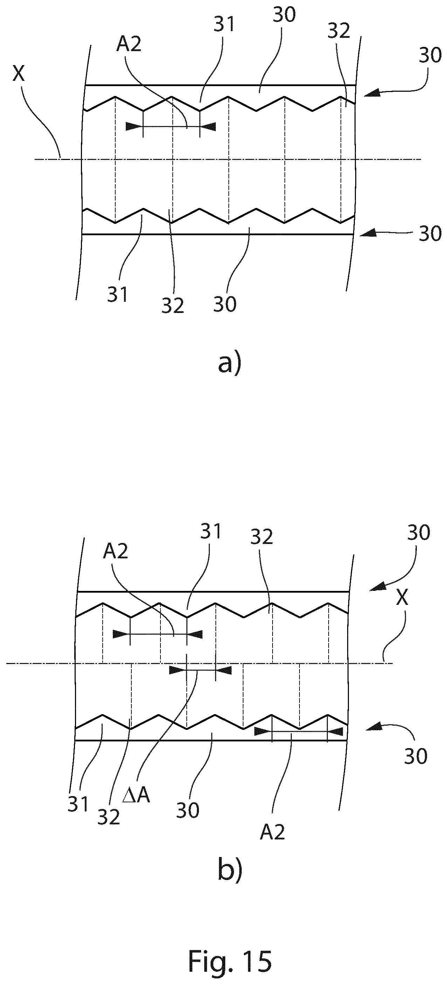

Figur 15a ist eine Anordnung der Zahnstange 30 auf zwei gegenüberliegenden Seiten der Längsachse X gemäß den Figuren 1-3 zu entnehmen, wobei ersichtlich ist, dass die Zähne 31 und die Zahnzwischenräume 32 symmetrisch (gespiegelt an der Längsachse X) angeordnet sind. Allerdings kann gemäß einer Weiterbildung, welche in der Figur 15 b gezeigt ist, die Zahnstange 30 asymmetrisch mit einem Versatz $\Delta A$ verschoben angeordnet sein, wobei in dem dargestellten Ausführungsbeispiel der Versatz $\Delta A$ einen halben Abstand A2 beträgt.

Bezugszeichenliste

| | |
|---|---|
| 1 | Antriebsvorrichtung |
| 2 | Längsverstelleinheit |
| 3 | Kraftfahrzeug |
| 10 | Antriebswelle |
| 12 | Führungsmittel |
| 13 | Nockenwellenscheibe |
| 14 | Kontaktfläche |
| 15 | Rollenkontakt |
| 16 | Kontaktrolle |
| 19 | Kupplung |
| 20 | Vortriebzahn |
| 21 | Hubbewegung |
| 22 | Zahnfuß |
| 24 | Kontaktfläche |
| 26 | Reibfläche |
| 30 | Zahnstange |
| 31 | Zahn |
| 32 | Zahnzwischenraum |
| 35 | Zahnstangengehäuse |
| 36 | Reibfläche |
| 38 | Raum |
| 40 | Schlitten |
| 41 | erster Endbereich |
| 42 | zweiter Endbereich |
| 43 | Gehäuseteil |
| 44 | Gehäuseteil |
| 45 | Führungsausnehmung für 20 |
| 48 | Lager |
| 50 | Antrieb |
| 55 | Getriebe |
| A1 | Abstand zwischen zwei Vortriebzähnen 20 |
| A2 | Abstand zwischen zwei Zähnen 31 |
| $\Delta A$ | Versatz |
| H1 | Höhe von 21 |
| H2 | Höhe von 31 |
| L1 | Länge von 21 |
| L2 | Länge von 31 |
| S | Symmetrielinie |
| X | Längsachse |
| $\alpha$ | Winkel von 13 |
| $\gamma 1$ | Zahnflankenwinkel von 21 |
| $\gamma 2$ | Zahnflankenwinkel von 31 |
| $\varphi$ | Umdrehung |
| $\Delta\varphi$ | Phasenversatz |

**Patentansprüche**

1. Linearantrieb (1), aufweisend

   - eine Antriebswelle (10), die entlang einer Längsachse (X) angeordnet ist,
   - wenigstens zwei Vortriebzähne (20), und
   - wenigstens eine Zahnstange (30) mit einer Mehrzahl von Zähnen (31),
   - wobei die Vortriebzähne (20) quer zur Längsachse (X) hubbeweglich sind und mit der Antriebswelle (10) derart trieblich gekoppelt sind, dass die mindestens zwei Vortriebzähne (20) mindestens eine zyklische Hubbewegung (21) im Verlauf einer Umdrehung ($\varphi$) der Antriebswelle (10) vornehmen und in die wenigstens eine Zahnstange (30) zum Erzeugen eines Vortriebes ein- und austauchen, und
   - wobei die zyklische Hubbewegung (21) der wenigstens zwei Vortriebzähne (20) mit einem Phasenversatz (Δφ) erfolgt,

**dadurch gekennzeichnet, dass**

der Vortrieb in der Längsachse (X) erzeugt wird, und
wobei der jeweilige Vortriebzahn (20) eine größere, Zahnlänge (L1) und eine größere Zahnhöhe (H1) als der Zahn (31) der Zahnstange (30) aufweist, oder wobei der jeweilige Vortriebzahn (20) eine gleiche oder kleinere Zahnlänge (L1) als der Zahn (31) der Zahnstange (30) aufweist.

2. Linearantrieb (1) nach Anspruch 1,
   **dadurch gekennzeichnet, dass**
   die wenigstens zwei Vortriebzähne (20) in einem ersten Abstand (A1) in der Längsachse (X) angeordnet sind, und dass die Zähne (31) in einem zweiten Abstand (A2) entlang der Längsachse (X) angeordnet sind, wobei folgendes gilt:

   ```
   A1 < A2 oder A1 > A2.
   ```

3. Linearantrieb (1) nach Anspruch 1 oder 2,
   **dadurch gekennzeichnet, dass**
   der jeweilige Vortriebzahn (20) und/oder der Zahn (31) der Zahnstange (30) rechteckig, keilförmig, evolventenförmig oder sinusförmig ausgebildet sind bzw. ist.

4. Linearantrieb (1) nach einem der vorgenannten Ansprüche,
   **dadurch gekennzeichnet, dass**
   der jeweilige Vortriebzahn (20) und/oder der Zahn (31) symmetrisch ausgebildet sind bzw. ist.

5. Linearantrieb (1) nach einem der vorgenannten Ansprüche,
   **dadurch gekennzeichnet, dass**
   der jeweilige Vortriebzahn (20) und der jeweilige Zahn (31) gleiche Zahnflankenwinkel ($\alpha 1$, $\alpha 2$) aufweisen.

6. Linearantrieb (1) nach einem der vorgenannten Ansprüche,
   **dadurch gekennzeichnet, dass**
   die wenigstens zwei Vortriebzähne (20) und die Zähne (31) eine korrespondierende Geometrie aufweisen.

7. Linearantrieb (1) nach einem der vorgenannten Ansprüche,
   **dadurch gekennzeichnet, dass**
   für den Phasenversatz (Δφ) der zyklischen Hubbewegung (21) der wenigstens zwei Vortriebzähne (20) in Bezug auf eine Umdrehung (φ) der Antriebswelle (10) folgendes gilt: 1/256 φ ≤ Δφ ≤ ½ φ.

8. Linearantrieb (1) nach einem der vorgenannten Ansprüche,
   **dadurch gekennzeichnet, dass**
   die Antriebswelle (10) als Kurbel- oder Nockenwelle ausgebildet ist, und wenigstens ein Führungsmittel (12) aufweist, das die zyklische Hubbewegung (21) während der Umdrehung (φ) der Antriebswelle (10) vorgibt.

9. Linearantrieb (1) nach Anspruch 8,
   **dadurch gekennzeichnet, dass**
   das mindestens eine Führungsmittel (12) eine Kontaktfläche (14) aufweist, und dass die Kontaktfläche in der Längsachse einen ebenen, konkaven, konvexen oder sinusförmigen Verlauf aufweist.

10. Linearantrieb (1) nach einem der Ansprüche 8 oder 9, **dadurch gekennzeichnet, dass**
    das mindestens eine Führungsmittel (12) eine Nockenwellenscheibe (13) umfasst, die im Querschnitt als Exzenter, Ellipse, Polygon, Tetragon, Pentagon oder Hexagon ausgebildet ist.

11. Linearantrieb (1) nach einem der vorgenannten Ansprüche,
    **dadurch gekennzeichnet, dass**
    der jeweilige Vortriebzahn (20) gefedert gegen die Antriebswelle (10) gedrückt wird und/oder mittels eines Pleuels mit der Antriebswelle (10) trieblich gekoppelt ist.

12. Linearantrieb (1) nach einem der vorgenannten Ansprüche,
    **dadurch gekennzeichnet, dass**
    der jeweilige Vortriebzahn (20) über einen Gleitkontakt oder einen einfachen oder mehrfachen Rollenkontakt (15) mit der Antriebswelle (10) trieblich gekoppelt ist.

13. Linearantrieb (1) nach einem der vorgenannten Ansprüche,
    **dadurch gekennzeichnet, dass**
    die wenigstens zwei Vortriebzähne (20) in einer Reihe entlang einer Achse parallel zur der Längsachse (X) angeordnet sind.

14. Linearantrieb (1) nach Anspruch 13,
    **dadurch gekennzeichnet, dass**
    um die Längsachse (X) wenigstens zwei Reihen von Vortriebzähnen und wenigstens zwei Zahnstangen (30) angeordnet sind.

15. Linearantrieb (1) nach Anspruch 13 oder 14,
    **dadurch gekennzeichnet, dass** die wenigstens zwei Reihen und die wenigstens zwei Zahnstangen um die Längsachse (X) umfangssymmetrisch angeordnet sind.

**16.** Linearantrieb (1) nach einem der Ansprüche 13 bis 15, **dadurch gekennzeichnet, dass** die wenigstens zwei Zahnstangen (30) zueinander um einen Versatz (ΔA) verschoben angeordnet sind.

**17.** Linearantrieb (1) nach einem der vorgenannten Ansprüche, **dadurch gekennzeichnet, dass** ein Schlitten (40) vorgesehen ist, und dass in dem Schlitten die Antriebswelle (10) und die wenigstens zwei Vortriebzähne gelagert gehalten sind.

**18.** Linearantrieb (1) nach einem der vorgenannten Ansprüche, **dadurch gekennzeichnet, dass** ein Antrieb (50) vorgesehen ist, wobei der Antrieb (50) die Antriebswelle (10) antreibt.

**19.** Linearantrieb (1) nach Anspruch 18, **dadurch gekennzeichnet, dass** zwischen dem Antrieb (50) und der Antriebswelle (10) ein Getriebe (55), insbesondere ein Planetengetriebe, angeordnet ist.

**20.** Längsverstelleinheit (2) aufweisend einen Linearantrieb (1) nach einem der vorgenannten Ansprüche.

**21.** Kraftfahrzeug (3) aufweisend einen Linearantrieb (1) nach einem der Ansprüche 1 bis 19.

**Claims**

**1.** Linear drive (1), comprising

- a drive shaft (10) which is arranged along a longitudinal axis (X),
- at least two propulsion teeth (20), and
- at least one rack (30) having a plurality of teeth (31),
- wherein the propulsion teeth (20) are liftable transversely to the longitudinal axis (X) and are drivingly coupled to the drive shaft (10) in such a way that the at least two propulsion teeth (20) perform at least one cyclical lifting movement (21) in the course of a rotation (φ) of the drive shaft (10) and dip into and out of the at least one rack (30) for generating a propulsion, and
- wherein the cyclical lifting movement (21) of the at least two propulsion teeth (20) occurs with a phase offset (Δφ),

**characterised in that** the the propulsion is created in the longitudinal axis (X), and wherein the respective propulsion tooth (20) has a greater tooth length (L1) and a greater tooth height (H1) than the tooth (31) of the rack (30), or wherein the respective propulsion tooth (20) has the same or a smaller tooth length (L1) compared with the tooth (31) of the rack (30).

**2.** Linear drive (1) according to claim 1, **characterised in that** the at least two propulsion teeth (20) are arranged at a first spacing (A1) in the longitudinal axis (X), and that the teeth (31) are arranged at a second spacing (A2) along the longitudinal axis (X), wherein the following applies:

$$A1 < A2 \text{ or } A1 > A2.$$

**3.** Linear drive (1) according to either claim 1 or claim 2, **characterised in that** the respective propulsion tooth (20) and/or the tooth (31) of the rack (30) is or are configured to be rectangular, wedge-shaped, involute-shaped, or sinusoidal.

**4.** Linear drive (1) according to any of the preceding claims, **characterised in that** the respective propulsion tooth (20) and/or the tooth (31) is or are configured symmetrically.

**5.** Linear drive (1) according to any of the preceding claims, **characterised in that** the respective propulsion tooth (20) and the respective tooth (31) have the same tooth flank angle (α1, α2).

**6.** Linear drive (1) according to any of the preceding claims, **characterised in that** the at least two propulsion teeth (20) and the teeth (31) have a corresponding geometry.

**7.** Linear drive (1) according to any of the preceding claims, **characterised in that** for the phase offset (Δφ) of the cyclical lifting movement (21) of the at least two propulsion teeth (20) with respect to a rotation (φ) of the drive shaft (10), the following applies: $1/256\,\varphi \leq \Delta\varphi \leq \frac{1}{2}\,\varphi$.

**8.** Linear drive (1) according to any of the preceding claims, **characterised in that** the drive shaft (10) is configured as a crankshaft or camshaft and comprises at least one guide means (12) which specifies the cyclical lifting movement (21) during the rotation (φ) of the drive shaft (10).

**9.** Linear drive (1) according to claim 8,

**characterised in that** the at least one guide means (12) has a contact surface (14), and that the contact surface has a flat, concave, convex or sinusoidal course in the longitudinal axis.

10. Linear drive (1) according to either claim 8 or claim 9, **characterised in that** the at least one guide means (12) comprises a camshaft (13) which is configured as an eccentric, ellipse, polygon, tetragon, pentagon or hexagon in cross-section.

11. Linear drive (1) according to any of the preceding claims, **characterised in that** the respective propulsion tooth (20) is pressed in a sprung manner against the drive shaft (10) and/or is drivingly coupled to the drive shaft (10) by means of a connection rod.

12. Linear drive (1) according to any of the preceding claims, **characterised in that** the respective propulsion tooth (20) is drivingly coupled to the drive shaft (10) via a sliding contact or a simple or multiple roller contact (15).

13. Linear drive (1) according to any of the preceding claims, **characterised in that** the at least two propulsion teeth (20) are arranged in a row along an axis in parallel with the longitudinal axis (X).

14. Linear drive (1) according to claim 13, **characterised in that** at least two rows of propulsion teeth and at least two racks (30) are arranged around the longitudinal axis (X).

15. Linear drive (1) according to either claim 13 or claim 14, **characterised in that** the at least two rows and the at least two racks are arranged in a peripherally symmetrical manner around the longitudinal axis (X).

16. Linear drive (1) according to any of claims 13 to 15, **characterised in that** the at least two racks (20) are arranged so as to be shifted relative to one another by an offset (ΔA).

17. Linear drive (1) according to any of the preceding claims, **characterised in that** a slide (40) is provided, and **in that** the drive shaft (10) and the at least two propulsion teeth are held mounted in the slide.

18. Linear drive according to any of the preceding claims, **characterised in that** a drive (50) is provided, wherein the drive (50) drives the drive shaft (10).

19. Linear drive (1) according to claim 18, **characterised in that** a transmission (55), in particular a planetary transmission, is arranged between the drive (50) and the drive shaft (10).

20. Longitudinal adjustment unit (2) comprising a linear drive (1) according to any of the preceding claims.

21. Motor vehicle (3) comprising a linear drive (1) according to any of claims 1 to 19.

**Revendications**

1. Entraînement (1) linéaire, comportant

   - un arbre (10) d'entraînement, qui est disposé suivant un axe (X) longitudinal,
   - au moins deux dents (20) d'avancement, et
   - au moins une crémaillère (30) ayant une pluralité de dents (31),
   - dans lequel les dents (20) d'avancement sont à mobilité de levage transversalement à l'axe (X) longitudinal et sont accouplées en actionnement à l'arbre (10) d'entraînement, de manière à ce que les au moins deux dents (20) d'avancement effectuent au moins un mouvement (21) de levée cyclique au cours d'une rotation (φ) de l'arbre (10) d'entraînement et pénètrent dans la au moins une crémaillère (30) et en sortent pour produire une avance, et
   - dans lequel le mouvement (21) de levée cyclique des au moins deux dents (20) d'avancement s'effectue avec un déphasage (Δφ),

   **caractérisé en ce que**
   on produit l'avancement dans l'axe (X) longitudinal, et dans lequel la dent (20) d'avancement respective a une longueur (L1) de dent plus grande et une hauteur (H1) de dent plus grande que la dent (31) de la crémaillère (30), ou dans lequel la dent (20) d'avancement respective a une longueur (L1) inférieure ou égale à la dent (31) de la crémaillère (30).

2. Entraînement (1) linéaire suivant la revendication 1, **caractérisé en ce que** les au moins deux dents (20) d'avancement sont disposées à une première distance (A1) dans l'axe (X) longitudinal, et **en ce que** les dents (31) sont disposées à une deuxième distance (A2) suivant l'axe (X) longitudinal, dans lequel on a ce qui suit :

$$A1 < A2 \text{ ou } A1 > A2.$$

3. Entraînement (1) linéaire suivant la revendication 1 ou 2, **caractérisé en ce que**

la dent (20) d'avancement respective et/ou la dent (31) de la crémaillère (30) sont ou est de constitution rectangulaire, cunéiforme, à développante ou sinusoïdale.

4. Entraînement (1) linéaire suivant l'une des revendications précédentes, **caractérisé en ce que** la dent (20) d'avancement respective et/ou la dent (31) sont ou est de constitution symétrique.

5. Entraînement (1) linéaire suivant l'une des revendications précédentes, **caractérisé en ce que** la dent (20) d'avancement respective et/ou la dent (31) respective ont de mêmes angles ($\alpha$1, $\alpha$2) de flanc de dent.

6. Entraînement (1) linéaire suivant l'une des revendications précédentes, **caractérisé en ce que** les au moins deux dents (20) d'avancement et les dents (31) ont une géométrie correspondante.

7. Entraînement (1) linéaire suivant l'une des revendications précédentes, **caractérisé en ce que**, pour le déphasage ($\Delta\varphi$) du mouvement (21) de levée cyclique des au moins deux dents (20) d'avancement par rapport à une rotation ($\varphi$) de l'arbre (10) d'entraînement, on a ce qui suit : $1/256\ \varphi \leq \Delta\varphi \leq \frac{1}{2}\ \varphi$.

8. Entraînement (1) linéaire suivant l'une des revendications précédentes, **caractérisé en ce que** l'arbre (10) d'entraînement est constitué sous la forme d'un arbre à manivelle ou d'un arbre à came et a au moins un moyen (12) de guidage, qui prescrit le mouvement (21) de levée cyclique pendant la rotation ($\varphi$) de l'arbre (10) d'entraînement.

9. Entraînement (1) linéaire suivant la revendication 8, **caractérisé en ce qu'** au moins un moyen (12) de guidage a une surface (14) de contact, et **en ce que** la surface de contact a, dans l'axe longitudinal, un tracé plan, concave, convexe ou sinusoïdal.

10. Entraînement (1) linéaire suivant l'une des revendications 8 ou 9, **caractérisé en ce que** le au moins un moyen (12) de guidage comprend un disque (13) d'arbre à came, qui est de constitution en section transversale sous la forme d'un excentrique, d'une ellipse, d'un polygone, d'un tétragone, d'un pentagone ou d'un hexagone.

11. Entraînement (1) linéaire suivant l'une des revendications précédentes, **caractérisé en ce que** la dent (20) d'avancement respective est poussée de manière élastique sur l'arbre (10) d'entraînement et/ou est accouplée en actionnement à l'arbre (10) d'entraînement au moyen d'une bielle.

12. Entraînement (1) linéaire suivant l'une des revendications précédentes, **caractérisé en ce que** la dent (20) d'avancement respective est accouplée en actionnement à l'arbre (10) d'entraînement par un contact glissant ou par un contact (15) roulant simple ou multiple.

13. Entraînement (1) linéaire suivant l'une des revendications précédentes, **caractérisé en ce que** les au moins deux dents (20) d'avancement sont montées en une rangée le long d'un axe parallèlement à l'axe (X) longitudinal.

14. Entraînement (1) linéaire suivant la revendication 13, **caractérisé en ce qu'** autour de l'axe (X) longitudinal sont disposées au moins deux rangées de dents d'avancement et au moins deux crémaillères (30).

15. Entraînement (1) linéaire suivant la revendication 13 ou 14, **caractérisé en ce que** les au moins deux rangées et les au moins deux crémaillères sont de symétrie circonférentielle autour de l'axe (X) longitudinal.

16. Entraînement (1) linéaire suivant l'une des revendications 13 à 15, **caractérisé en ce que** les au moins deux crémaillères (30) sont décalées l'une par rapport à l'autre d'un décalage ($\Delta$A).

17. Entraînement (1) linéaire suivant l'une des revendications précédentes, **caractérisé en ce qu'** il est prévu un chariot (40) et **en ce que** l'arbre (10) d'entraînement et les au moins deux dents d'avancement sont retenues en étant mises dans le chariot.

18. Entraînement (1) linéaire suivant l'une des revendications précédentes, **caractérisé en ce qu'** il est prévu un entraînement (50), dans lequel l'entraînement (50) entraîne l'arbre (10) d'entraînement.

19. Entraînement (1) linéaire suivant la revendication 18, **caractérisé en ce qu'** une transmission (55), en particulier un engrenage épicycloïdal, est monté entre l'entraînement (50) et l'arbre (10) d'entraînement.

**20.** Unité (2) de réglage longitudinal comportant un entraînement (1) linéaire suivant l'une des revendications précédentes.

**21.** Véhicule (3) automobile comportant un entraînement (1) linéaire suivant l'une des revendications 1 à 19.

Fig. 1

Fig. 2

Fig. 3

Fig. 4

Fig. 5

Fig. 6

Fig. 7

Fig. 8

Fig. 9

a)  b)  c)  d)  f)  e)

Fig. 10

a)  b)

Fig. 11

a)      b)      c)      d)      e)

Fig. 12

a)

b)

Fig. 13

Fig. 14

a)

b)

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3640197 A1
- DE 4208948 C2
- DE 19642655 C2
- DE 19815283 A1
- DE 102004013009 A1
- DE 102006052936 A1
- EP 0612935 A1